# EUROPEAN PATENT APPLICATION

(11) **EP 3 974 143 A1**
(43) Date of publication of application: **30.03.2022**
(21) Application number: 19937366.3
(22) Date of filing: 12.07.2019
(51) Int. Cl.: B29B 17/04, B02C 7/02, B02C 18/00, B29C 31/04, B29C 48/00

(54) **PLASTIC WASTE GRINDING METHOD, AND SYNTHETIC RESIN MOLDED PRODUCT MANUFACTURING METHOD USING PLASTIC WASTE**

(71) Applicant: Technique Co., Ltd., Tokyo, 157-0061 (JP)
(72) Inventor: KAMITE Masayuki, Tokyo 157-0061 (JP)
(74) Representative: Fédit-Loriot
(86) International application number: PCT/JP2019/027802
(87) International publication number: WO 2021/009815

(57) **Abstract**

The present invention provides a method for using a residue of a plastic, RPF, and ocean plastic trash, which is generated without having been able to be material recycled, of the recovered plastic waste, as a material for a new synthetic resin molded product, and a method for grinding plastic waste enabling the method to be implemented. The method for grinding plastic waste in accordance with the present invention is characterized by mixing 30 to 80 wt% of plastic waste P and 20 to 70 wt% of a woodchip W by a mixer 3 after equalizing the size of a diameter or a side thereof so as to be 5 mm or less, and grinding a mixture thereof into a fine powder with a particle size of 1 mm or less by a grinding device 4 including a rotor rotating at a high speed.

## Description

### TECHNICAL FIELD

The present invention relates to a method for grinding, to a particle size of 1 mm or less, plastic waste derived from industrial waste discharged from factories of companies, or the like, general waste discharged by consumers, ocean plastic trash, and the like, and a method for manufacturing a synthetic resin molded product using a powder of plastic waste.

### BACKGROUND ART

Currently, in order to cope with the problems of the preservation of global environment, effective use of exhaustible resources, and waste treatment, and the like, efforts have been made to improve the recovery rate of plastic waste, and the recycling rate thereof. For example, waste such as containers made of plastic or plastic film packaging materials included in the general waste discharged by consumers, and the plastic waste included in the industrial waste discharged from factories of companies, or the like, are collected in a classified manner as much as possible, and is reused as the raw material for a new plastic product (i.e., remaking into new products, or material recycling).

However, it is difficult to use all the recovered plastic waste to be remade into new products. At present, a significant amount of residues (those which could not be remade into new products and were left as-is in the step of remaking into new products) are generated from the plastic waste of containers and packaging materials recovered as general waste, and from plastic waste in industrial waste. The residues of the plastic waste are mainly burnt, and are recovered as heat energy, or are used as the raw materials for solid fuel referred to as "RPF (Refuse Paper and Plastic Fuel)" (i.e., thermal recycling) .
Patent Document 1: JP 2004-174304 A
Patent Document 2: JP 5459888 B
Patent Document 3: JP 6408896 B

### SUMMARY OF INVENTION

### Technical Problem

As described above, the residues of plastics, which are generated without being able to be remade into new products (i.e., material recycled), of the recovered plastic waste are mainly used for thermal recycle. However, with thermal recycle, resources can be only partially reused, and undesirably, greenhouse gases or toxic gases are discharged upon burning. On the other hand, material recycle is a so-called circulation type recycle method, and has the highest recycle efficiency from the viewpoint of effectively using the resources, and yields the smallest environmental load, and is the most excellent recycle method.

Therefore, when a new technology that enables the use of the residues of plastics, which cannot be used for material recycle with the current technology and which is inevitably generated, can be developed for material recycle, the resources can be more effectively used, and the environmental load can be reduced, which can contribute to the preservation of global environment.

Further, there is a concern that marine pollution due to a large amount of drifting plastic trash is becoming more serious. It is a pressing issue worldwide to establish an effective method of processing of ocean plastic trash. However, the effective method has not yet been established.

The present invention is for solving such problems of the prior art. It is an object of the present invention to provide a method for using the residues of plastics, RPF (Refuse Paper and Plastic Fuel), and ocean plastic trash, which are generated without being able to be material recycled, of the recovered plastic waste as the materials for new synthetic resin molded products (method for manufacturing a synthetic resin molded product using plastic waste), and a method for grinding plastic waste enabling the method to be implemented.

### Solution to Problem

A method for griding plastic waste in accordance with the present invention is characterized by mixing 30 to 80 wt% of plastic waste, and 20 to 70 wt% of a second material, and grinding the mixture into a fine powder having a particle size of 1 mm or less by a grinding device. Incidentally, as the grinding device, a grinding device including a rotor rotating at a speed as high as 3000 rpm or more is preferably used. Further, as the second material to be mixed with the plastic waste, a woodchip (a wood fragment or a wood flour) is preferably used.

Further, the plastic waste and the second material (woodchip) are preferably mixed after equalizing respective upper limit sizes thereof (e.g., after equalizing sizes to a diameter or a side of 5 mm or less (or 4 mm or less) with respect to the plastic waste, and to 4 mm or less (or 5 mm or less) with respect to the second material by a crusher).

A method for manufacturing a synthetic resin molded product using plastic waste in accordance with the present invention is characterized by feeding the ground product of a mixture of the plastic waste and the second material (such as a woodchip) obtained by the foregoing plastic waste grinding method as a raw material for the synthetic resin molded product to a molding machine (an extrusion molding machine is preferably used), and carrying out a molding step. Incidentally, preferably, by performing sieving, from the ground product of the mixture of the plastic waste and the second material (such as a woodchip), those having a particle size of more than 1 mm are removed, and a fine powder having a particle size of 1 mm or less is sorted out, for use as the raw material of the synthetic resin molded product.

### Advantageous Effects of Invention

With the method for grinding plastic waste in accordance with the present invention, even when plastic wastes with a plurality of kinds of plastics mixed therein (such as plastic residues, RPF, ocean plastic trash, and the like), or with other substances than plastic (such as aluminum) mixed therein are targeted, the wastes are fed to a grinding device while being mixed with the second material (such as a woodchip), thereby carrying out a grinding step. As a result, it is possible to perform grinding into a fine powder with a particle size of 1 mm or less without a problem (by preferably avoiding the problem that a part of the plastics is attached and deposited onto the constituent element of the grinding device, resulting in the reduction of the grinding efficiency, or an ungrindable state, the problem that a very thin plastic film may slip through the gap between the constituent elements of the grinding device, and other problems).

Further, with the method for manufacturing a synthetic resin molded product using plastic wastes in accordance with the present invention, the residues of plastics, RPF, and ocean plastic trash generated without having been able to be material recycled of the recovered plastic wastes can be used as the materials for new synthetic resin molded products. For this reason, exhaustible resources can be more effectively utilized, so that environmental load can be reduced, and further the effective method of processing of ocean plastic trash can be established. These can largely contribute to the preservation of global environment.

### BRIEF DESCRIPTION OF DRAWINGS

Fig. 1 is an explanatory view of a method for grinding plastic waste in accordance with a first embodiment of the present invention.
Fig. 2 is a view showing a configuration example of a grinding device 4 usable in the method for grinding plastic waste in accordance with the first embodiment of the present invention.
Fig. 3 is a view showing another configuration example of the grinding device 4 usable in the method for grinding plastic waste in accordance with the first embodiment of the present invention.

### DESCRIPTION OF EMBODIMENTS

The present invention can be executed as a method for grinding plastic waste (first embodiment), and can also be executed as a method for manufacturing a synthetic resin molded product using plastic waste (second embodiment). Below, referring to the accompanying drawings, each embodiment of the present invention will be described.

### - First embodiment (method for grinding plastic waste)

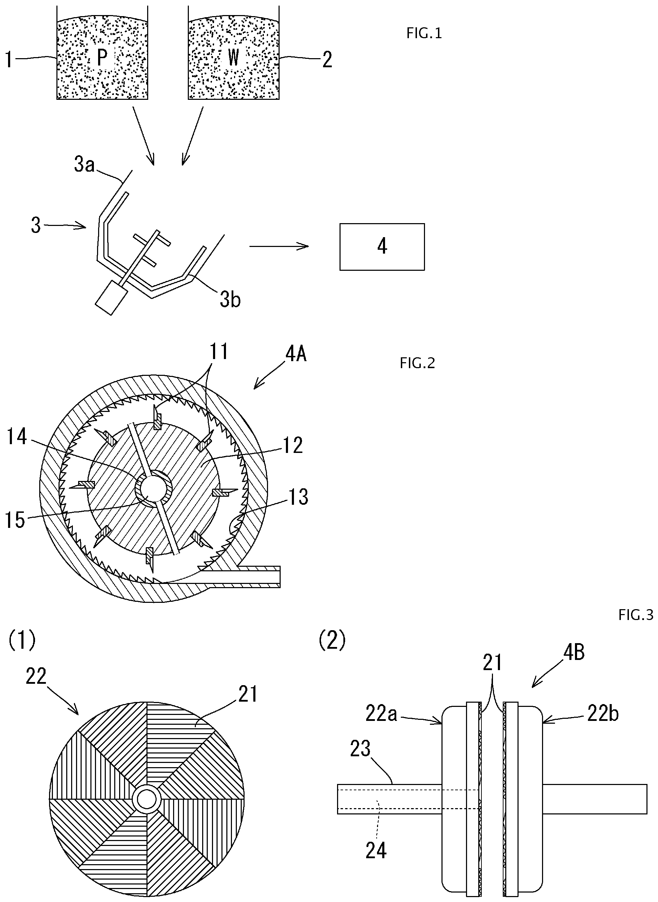

Fig. 1 is an explanatory view of a method for grinding plastic waste in accordance with a first embodiment of the present invention. In Fig. 1, a reference numeral 1 is a first tank, a reference numeral 2 is a second tank, a reference numeral 3 is a mixer, and a reference numeral 4 is a grinding device.

The first tank 1 accommodates a plastic waste P. The term "plastic waste" herein referred to means a discarded and recovered plastic product, packaging container made of a plastic, packaging film made of a plastic, or fragments thereof, or the like, and includes those derived from industrial waste discharged from a factory of an enterprise, general waste discharged from a consumer, ocean plastic trash, and the like.

In the present embodiment, the kind of the plastic forming the plastic waste P has no restriction. Examples thereof may include plastics such as polyethylene (PE), polypropylene (PP), polystyrene (PS), polyvinyl chloride (PVC), and polyethylene terephthalate (PET).

Further, the plastic waste P is not required to include only one kind of plastic. The plastic waste P including a plurality of kinds of plastics mixed therein can be charged into the first tank 1. Further, the plastic waste P may include other substances than a plastic (e.g., a plastic film laminated with aluminum or other metals, papers, fibers, and other foreign matters) mixed therein. However, the mixing amount of the substances other than a plastic is preferably 10 wt% or less based on the total amount of the plastic waste P.

Further, the plastic waste P is accommodated in a form of a fragment or a flake with a diameter or a side of 5 mm or less in the first tank 1. Therefore, when the plastic waste P has a size of a diameter or a side of 5 mm or more, the step of crushing the plastic waste P into a form of a fragment or a flake with a diameter or a side of 5 mm or less is carried out using a crusher or the like before the accommodation into the first tank 1. Incidentally, the one in another form than the fragment or flake form (e.g., the one with a length of 5 mm or more got into a lint shape, or the one in a fine powder shape) may be included in the plastic waste P.

The second tank 2 accommodates a material (second material) to be mixed with the plastic waste P therein. In the present embodiment, a woodchip W is used as the second material. The term "woodchip" herein referred to means a fragment of wood such as a natural wood, a laminated wood, a MDF, or a plywood or a wood flour thereof, and includes sawdust and shavings generated in association with working of wood at a lumber mill, a manufacturing plant of a woodwork product, or the like, and the discarded wood, lumber remnants thereof, or those obtained by crushing wood products (such as wooden furniture and wooden construction material).

Further, the woodchip W has a diameter or a side of 5 mm or less, and is accommodated in the second tank 2. Therefore, when the woodchip W has a size of a diameter or a side of 5 mm or more, the step of crushing the woodchip W so as to provide a diameter or a side of 5 mm or less is carried out using a crusher or the like before the accommodation into the second tank 2. Incidentally, the woodchip W may include foreign matters such as papers, fibers, laminate sheets, or metal powder mixed therein. However, the mixing amount of the foreign matters is preferably 20 wt% or less based on the total amount of the woodchip W.

The plastic waste P accommodated in the first tank 1, and the woodchip W accommodated in the second tank 2 are respectively transported by a transport device (not shown), and are charged into the mixer 3. As the mixer 3, for example, as shown in Fig. 1, there is used the one configured such that a stirring impeller 3b rotates at a low speed (e.g., about 100 to 140 rpm) in a bowl 3a, and capable of stirring and mixing the charged object to be processed in the bowl 3a.

Incidentally, although the mixing ratios of the plastic waste P and the woodchip W are preferably set as the equal amounts (50 wt% for each), the mixing ratios can be appropriately increased or decreased according to the conditions set at (30 to 80 wt% for the plastic waste P, and at 20 to 70 wt% for the woodchip W).

Further, the plastic waste P and the woodchip W have been equalized in terms of the size (the upper limit size) at the time point when the plastic waste P and the woodchip W are accommodated in the tanks 1 and 2, respectively. However, it may be difficult to uniformly mix them entirely with short-time stirring due to the reason that the plastic waste P and the woodchip W are different from each other in specific gravity and shape, and other reasons. In such a case, stirring is preferably performed long enough. For example, when stirring is performed over 5 minutes or more, the soft plastic (particularly, a film-shaped plastic) in the plastic waste P is slightly softened by the frictional heat resulting from the stirring, and is compatible with the woodchip W. Accordingly, the entire mixture can be uniformly mixed. However, the entire mixture may be able to be uniformly mixed with short-time (e.g., 1-minute) stirring. Therefore, the stirring time can be appropriately determined while confirming how mixing is performed.

When the plastic waste P and the woodchip W are sufficiently mixed with each other, the mixture thereof is discharged from a mixer 3, and is quantitatively supplied to a grinding device 4, and is ground. In the present embodiment, the specific configuration of the grinding device 4 has no restriction. In the case where the plastic waste P and the woodchip W having a size of a diameter or a side of about 5 mm are introduced, the grinding device 4 is used which can grind 75 wt% or more thereof into a fine powder with a particle size of 1 mm or less.

For example, as shown in Fig. 2, an impact type pulverizing mill 4A having a rotor 12 including a plurality of rotary blades 11 (or a plurality of hammers) mounted at the outer circumferential part thereof, and a file-shaped fixed blade 13 arranged so as to surround the radial outside of the rotary orbit of the rotary blade 11, and capable of pulverizing the object to be processed introduced through a supply route 15 formed in the inside of the rotating shaft 14 with a strong impact action by the rotary blade 11 and the fixed blade 13 by rotating the rotor 12 at a high speed can be used as the grinding device 4.

Alternatively, a pulverizing mill 4B having a rotor 22 including a file-shaped concave-convex surface 21 formed thereon as shown in Fig. 3(1), and including two rotors 22a and 22b arranged with a prescribed interval therebetween so that the concave-convex surfaces 21 are opposed to each other as shown in Fig. 3(2), and configured such that an object to be processed is supplied to the region between the rotors 22a and 22b through a supply route 24 formed in the inside of the rotating shaft 23 with the rotors 22a and 22b rotated at a high speed in the opposite directions, respectively, and is collided with the concave-convex surfaces 21, thereby to be able to be pulverized can be used as the grinding device 4.

Incidentally, in order to pulverize an object to be processed with a size of a diameter or a side of about 5 mm into a particle size of 1 mm or less by the grinding device 4 with efficiency and for a short time, it becomes necessary to rotate the rotor of the grinding device 4 (e.g., the rotor 12 shown in Fig. 2, or the rotors 22, 22a, and 22b shown in Fig. 3) at a high speed (e.g., 3000 rpm or more). Then, when the object to be processed is supplied to the grinding device 4 with the rotor rotating at a high speed, the friction between the objects to be processed and between the object to be processed and the element in the grinding device 4 generates heat. When such a grinding step is continuously carried out, the temperatures of the inside of the grinding device 4, and the object to be processed may become high (e.g., 80°C or more).

When the plastic waste P including a plurality of kinds of plastics mixed therein is supplied to the grinding device 4 as in the present embodiment, the plastic waste P includes therein low melting point sheets and films, and low melting point additives added during plastic manufacturing. This causes a fear that, when the temperature of the inside of the grinding device 4 increases to about 80°C, those are softened, and are attached, and deposited on the elements in the grinding device 4 (e.g., the rotary blade 11, and the fixed blade 13 shown in Fig. 2, or the concave-convex surface 21 of the rotor 22 shown in Fig. 3), resulting in the reduction of the grinding efficiency, or resulting in an ungrindable state.

Incidentally, although some grinding devices 4 are equipped with a cooling device, it is difficult to cool the rotors 12 and 22 and the tip of the rotary blade 11 rotating at a high speed. For this reason, when the plastic waste P including a plurality of kinds of plastics mixed therein is supplied, and the grinding step is continuously carried out, the plastics are still attached and deposited, resulting in problems such as the reduction of the grinding efficiency and an ungrindable state.

Further, the impact type pulverizing mill 4A shown in Fig. 2 is configured such that the particle size of the ground product can be adjusted by adjusting the gap dimension between the rotary blade 11 and the fixed blade 13 (the particle size of the ground product can be made smaller by setting the gap dimension smaller). In the case where the plastic waste P includes a plastic film with a thickness of about 100 µm therein, even when the gap dimension between the rotary blade 11 and the fixed blade 13 is set as small as possible, a very thin plastic film may slip through the gap therebetween. In this case, grinding into a particle size of 1 mm or less cannot be performed.

However, in the present embodiment, only the plastic waste P is not supplied to the grinding device 4, but the mixture of the plastic waste P and the woodchip W is supplied to the grinding device 4, and the grinding step is carried out. For this reason, the foregoing problems can be preferably avoided.

Specifically, in the case where the mixture of the plastic waste P and the woodchip W is supplied to the grinding device 4, and the grinding step is carried out, even when the temperature of the grinding device 4 increases due to the frictional heat, the increase in temperature can be suppressed by the evaporation of the moisture included in the mixture, or the like, and even when the plastics are partially softened, and are momentarily attached on the element in the grinding device 4, the woodchip W scrubs them (i.e., the woodchip W collides with the attached plastics, and physically rips off them). As a result, even when the grinding step is continuously carried out, it is possible to preferably avoid the attachment and deposition of the plastics onto the rotors and the like of the grinding device 4.

Further, the plastic waste P is stirred while being mixed with the woodchip W in the grinding device 4. For this reason, even when a very thin plastic film is included in the plastic waste P, it is possible to preferably avoid the film from slipping through the gap between the rotary blade 11 and the fixed blade 13 alone.

Incidentally, when the mixing ratio of the woodchip W is less than 20 wt% (the mixing ratio of the plastic waste P is 80 wt% or more), the plastic attachment preventive effect and the slipping preventive effect as described above may be reduced. For this reason, the mixing ratio of the woodchip W is preferably set at 20 wt% or more. Whereas, in the case where the mixing ratio of the plastic waste P is less than 30 wt% (the mixing ratio of the woodchip W is 70 wt% or more), when the ground product is used as the raw material for a synthetic resin molded product, the plastic component may not be able to be allowed to favorably function as a binder (defective molding may be caused). For this reason, the mixing ratio of the plastic waste P is preferably set at 30 wt% or more.

As described above, of the recovered plastic waste, the residues of plastics generated without having been able to be remade into new products (i.e., material recycled) have been currently mainly used for thermal cycle (such as heat energy recovery by burning or conversion to RPF). When such plastic residues and RPF can be ground to a fine powder with a particle size of 1 mm or less, there is a possibility that these can be used for material recycle (i.e., can be used as the raw materials for new plastic products). Further, the same also applies to the ocean plastic trash.

However, the plastic residues, RPF, and the ocean plastic trash as described above include a plurality of kinds of plastics mixed therein. For this reason, when these are tried to be ground by a conventional grinding device 4, or grinding method, the plastics are partially attached and deposited on the rotors of the grinding device 4, and the like. This entails a necessity of intermittently carrying out the step of removing the attached plastics. Accordingly, the grinding step cannot be carried out continuously. Further, slipping of the plastic film is caused, which undesirably makes impossible grinding into a fine powder with a particle size of 1 mm or less.

In contrast, with the method for grinding plastic waste in accordance with the present embodiment, even when the plastic waste P including a plurality of kinds of plastics mixed therein such as plastic residues, RPF, and ocean plastic trash is targeted, these are supplied while being mixed with the woodchip W to the grinding device 4, and the grinding step is carried out. As a result, such problems can be preferably avoided, and grinding into a fine powder with a particle size of 1 mm or less can be performed.

Incidentally, in the present embodiment, as the material (second material) to be mixed with the plastic waste P, the woodchip W is used. However, other materials (e.g., a crushed product or a ground product of carbon fiber or glass fiber for use in FRP, or a ground product of shell, bamboo chips, and chaff of grains) can also be used as the second material. However, the material is required to be a material not molten under a temperature condition of 200°C.

By rotating the rotor of the grinding device 4 at a high speed, even when the temperature of the inside of the grinding device 4 increases, the temperature does not largely exceed 100°C. Therefore, when the second material has a heat resistance of about 200°C, it is possible to prevent the attachment and the deposition of plastics in the inside of the grinding device 4 without a problem. Further, in the case where the fine powder obtained by carrying out the method in accordance with the present embodiment is used as the raw material for the synthetic resin molded product, when the material which is not molten under the temperature condition of 200°C is used as the second material, the material functions as a filler in the molded product, and stabilizes the shape of the molded product, and appears on the surface layer. As a result, it is possible to manufacture a molded product assuming a beautiful outer appearance shape as with a pointillist painting.

Incidentally, in the present embodiment, after mixing the plastic waste P and the woodchip W, the mixture thereof is supplied to the the grinding device 4 to be ground. However, the following is also acceptable: the plastic waste P and the woodchip W are individually supplied to the grinding device 4, and are mixed in the grinding device 4 by the rotation of the rotor, and the mixture thereof is ground.

### - Second embodiment (method for manufacturing synthetic resin molded product using plastic waste)

The ground product of the mixture of the plastic waste P and the woodchip W obtained by the method for grinding plastic waste in accordance with the first embodiment is sieved, thereby removing the ones having a particle size of more than 1 mm. The sorted fine powder with a particle size of 1 mm or less is supplied as the raw material for the synthetic resin molded product to an extrusion molding machine, and the molding step is carried out. Incidentally, at this step, a pigment and other additives can be added to the raw material, if required.

When the heating temperature of the extrusion molding machine is set at a proper value (e.g., 150 to 210°C), and the molding step is carried out, the raw material (and the additives) are heated in the molding machine, and the plastic powder is extruded in a molten state from a die, and is cooled and molded. As a result, it is possible to manufacture a synthetic resin molded product having a woody texture with wood flour serving as a filler, or the like dispersed in the inside of the plastic functioning as a binder, and further with the dispersed wood flour exposed on the surface.

Incidentally, when the plastic waste P and the woodchip W serving as the raw materials are mixed without being ground into a fine powder with a particle size of 1 mm or less (i.e., with a particle size of more than 1 mm, and with uneven sizes), and are supplied to an extrusion molding machine, and the molding step is carried out, the fragment or the flake in the plastic waste P not molten at the heating temperature (about 200°C) or less in the extrusion molding machine may appear with a size of more than 1 mm on the surface layer of the molded product. In this case, undesirably, direct contact with the hand, foot, or the like of a user is dangerous, and the sense of beauty of the molded product is impaired. However, with the method in accordance with the present embodiment, such a problem can be preferably avoided, and it is possible to manufacture a woody synthetic resin molded product assuming a beautiful outer appearance shape as with a pointillist painting.

Further, in the present embodiment, as the molding machine for carrying out the molding step, an extrusion molding machine is used. However, the molding step can also be carried out using another molding machine (such as an injection molding machine, a press molding machine, or a casting molding machine).

### REFERENCE SIGNS LIST

- 1: First tank
- 2: Second tank
- 3: Mixer
- 3a: Bowl
- 3b: Stirring impeller
- 4: Grinding device
- 4A: Impact type pulverizing mill
- 4B: Pulverizing mill
- 11: Rotary blade
- 12: Rotor
- 13: Fixed blade
- 14: Rotating shaft
- 15: Supply route
- 21: Concave-convex surface
- 22, 22a, 22b: Rotor
- 23: Rotating shaft
- 24: Supply route

## Claims

1. A method for grinding plastic waste, comprising mixing 30 to 80 wt% of plastic waste and 20 to 70 wt% of a second material, and grinding a mixture thereof by a grinding device.

2. The method for grinding plastic waste according to claim 1, wherein 75 wt% or more of the mixture of the plastic waste and the second material is ground so as to be a fine powder with a particle size of 1 mm or less.

3. The method for grinding plastic waste according to claim 1, wherein the mixture of the plastic waste and the second material is ground by the grinding device including a rotor rotating at a speed as high as 3000 rpm or more.

4. The method for grinding plastic waste according to claim 1, wherein a material not molten under a temperature condition of 200°C is used as the second material.

5. The method for grinding plastic waste according to claim 1, wherein a woodchip, a bamboo chip, a ground product of a shell, or chaff of grain is used as the second material.

6. The method for grinding plastic waste according to claim 1, wherein the plastic waste and the second material are mixed after being equalized in upper limit size respectively.

7. The method for grinding plastic waste according to claim 1, wherein the plastic waste and the second material are mixed after being equalized to have a size of a diameter or a side of 5 mm or less by a crusher respectively.

8. A method for manufacturing a synthetic resin molded product using plastic waste, comprising supplying the ground product of the mixture of the plastic waste and the second material obtained in the method for grinding plastic waste according to any one of claims 1 to 7 to a molding machine as a raw material for the synthetic resin molded product, and carrying out a molding step.

9. A method for manufacturing a synthetic resin molded product using plastic waste, comprising sieving the ground product of the mixture of the plastic waste and the second material obtained in the method for grinding plastic waste according to any one of claims 1 to 7 and removing those having a particle size of more than 1 mm, supplying a sorted fine powder having a particle size of 1 mm or less to a molding machine as a raw material for the synthetic resin molded product, and carrying out a molding step.

10. The method for manufacturing a synthetic resin molded product using plastic waste according to claim 8 or claim 9, wherein as the molding machine, an extrusion molding machine is used.
